# EUROPÄISCHE PATENTANMELDUNG

(11) **EP 1 248 270 A1**
(43) Veröffentlichungstag der Anmeldung: **09.10.2002**
(21) Anmeldenummer: 02007458.9
(22) Anmeldetag: 30.03.2002
(51) Int. Cl.: G21C 3/06, G21F 5/008, G21F 5/12

(54) **Verschlussstopfen für ein zur Aufnahme eines Brennstabes bestimmtes Kapselrohr sowie Kapsel für einen Kernbrennstab**

(30) Priorität: 03.04.2001 DE 10116627
(71) Anmelder: Framatome ANF GmbH, 91058 Erlangen (DE)
(72) Erfinder: Hummel, Wolfgang, 91085 Weisendorf (DE)
(74) Vertreter: Mörtel & Höfner

(57) **Zusammenfassung**

Ein Verschlußstopfen (18) für ein zur Aufnahme eines Brennstabes (10) bestimmtes Kapselrohr (16) soll mit besonders geringem Aufwand ein gas- und partikeldichtes Verschließen der Kapsel (16) ermöglichen. Dazu weist der Verschlußstopfen (18) erfindungsgemäß in seinem in das Kapselrohr (16) einbringbaren Teilbereich (20) an seiner Oberfläche eine Anzahl von umlaufenden Nuten (22) auf. Die den Brennstab (10) enthaltende Kapsel (16) ist dabei jeweils im Bereich einer der umlaufenden Nuten (22) des Verschlußstopfens (18) zu einer mit der jeweiligen Nut (22) in Eingriff stehenden umlaufenden Sicke (24) verformt, so daß sich eine formschlüssige und gasdichte Verbindung mit dem jeweiligen Verschlußstopfen (18) bildet.

## Beschreibung

Die Erfindung betrifft einen Verschlußstopfen für ein zur Aufnahme eines Brennstabes bestimmtes Kapselrohr. Sie bezieht sich weiter auf eine Kapsel für einen Kernbrennstab.

In einer kerntechnischen Anlage, insbesondere in einer Kernkraftwerksanlage, kommt üblicherweise spaltbares Brennstoffmaterial zum Einsatz, dessen bei seiner Spaltung frei werdender Energieinhalt zur Erzeugung von elektrischer Energie verwendet wird. Der spaltbare Kernbrennstoff ist dabei üblicherweise zur Bildung eines Brennstabs in einem beidseitig verschlossenen Hüllrohr angeordnet. Eine Mehrzahl derartiger Brennstäbe können dabei auf einer gemeinsamen Tragstruktur angeordnet sein, wodurch ein sogenanntes Brennelement oder Kernbrennelement gebildet ist.

In bestimmten Betriebszuständen der kerntechnischen Anlage kann ein Austausch einzelner derartiger Brennstäbe erforderlich oder sinnvoll sein. Beispielsweise könnte infolge einer länger andauernden thermischen oder mechanischen Beanspruchung das das spaltbare Material umgebende Hüllrohr brüchig werden oder Risse aufweisen. Ein Brennstab mit einem derartig schadhaften Hüllrohr wird üblicherweise aus sicherheits- und aus betriebstechnischen Gründen schnellstmöglich ausgetauscht. Dabei wird der Brennstab aus dem Brennelement entfernt und einer Wiederaufarbeitung, Zwischen- oder möglicherweise Endlagerung zugeführt, wobei auch eine Entsorgung des noch verbliebenen spaltbaren Materials vorgesehen sein kann.

Um während des Transports, beispielsweise zu einer Wiederaufarbeitungsanlage, oder während einer Zwischen- oder einer Endlagerung Gas- und Partikelfreisetzungen aus einem derartigen Brennstab mit schadhaftem Hüllrohr sicher zu vermeiden und somit eine Gefährdung der Umwelt auszuschließen, ist üblicherweise eine sogenannte Kapselung des jeweiligen Brennstabs zu Transport- und/oder Lagerzwecken vorgesehen. Dazu wird der Brennstab in eine sogenannte Kapsel verbracht, die üblicherweise ein zur Aufnahme des Brennstabs geeignetes, hinsichtlich der Materialauswahl auf besondere Dichtigkeit hin ausgelegtes Kapselrohr umfasst. Endseitig sind für eine derartige Kapsel Verschlußstopfen vorgesehen. Beispielsweise ist aus der DE 196 40 393 A1 eine derartige Kapsel für einen Brennstab bekannt, bei der das Kapselrohr endseitig jeweils mit einen Verschlußstopfen verschlossen ist. Zum Verschließen der Kapsel ist der Verschlußstopfen dabei auf das Kapselrohr aufschraubbar ausgebildet.

Der Erfindung liegt die Aufgabe zugrunde, einen Verschlußstopfen für das Kapselrohr einer derartigen Kapsel anzugeben, mit dem mit besonders geringem Aufwand ein gas- und partikeldichtes Verschließen der Kapsel ermöglicht ist. Weiterhin soll eine auf besonders einfache Weise gas- und partikeldicht verschließbare Kapsel für einen Kernbrennstab angegeben werden.

Bezüglich des Verschlußstopfens für ein zur Aufnahme eines Brennstabes bestimmtes Kapselrohr wird diese Aufgabe erfindungsgemäß gelöst, indem der Verschlußstopfen in einem in das Kapselrohr einbringbaren Teilbereich an seiner Oberfläche eine Anzahl von umlaufenden Nuten aufweist.

Die Erfindung geht dabei von der Überlegung aus, daß der Verschlußstopfen für einen besonders gering gehaltenen Herstellungs- und Montageaufwand eine besonders einfache Außenkontur aufweisen sollte. Gerade bei einem aufschraubbaren Verschlußstopfen ist an der Außenkontur jedoch auf vergleichsweise aufwendige Weise ein Schraubgewinde angebracht. Wie sich jedoch überraschenderweise herausgestellt hat, ist beim üblichen Einsatz einer derartigen Kapsel für einen Brennstab, nämlich zu Transport- und/oder Lagerzwecken, ein erneutes Öffnen der einmal verschlossenen, den Brennstab enthaltenen Kapsel nicht erforderlich. Somit kann eine Vereinfachung der Außenkontur des Verschlußstopfens durch eine Abkehr von der bei der bekannten Kapsel vorgesehenen Schraubverbindung des Verschlußstopfens erreicht werden. Der vereinfachte Verschlußstopfen weist somit in einem in das Kapselrohr einbringbaren Teilbereich eine vergleichsweise glatte, vorzugsweise zylindrische, Außenkontur auf und ist somit in die jeweilige Mündung des Kapselrohrs einschiebbar. Um dennoch die erforderliche Dichtigkeit hinsichtlich einer Freisetzung von Gas oder Partikeln in den Außenbereich der Kapsel sicherzustellen, sind an der Außenkontur des in das Kapseirohr einbringbaren Teilbereichs eine Anzahl von umlaufenden Nuten oder Dichtnuten (auch als Eindrehungen bezeichnet) angeordnet.

Aufgrund seiner vergleichsweise glatten Außenkontur im in das Kapselrohr einbringbaren Teilbereich ist der Verschlußstopfen in dieses einschiebbar und somit mit besonders geringem Aufwand montierbar. Um dabei auch bei einfacher Montierbarkeit eine besonders hohe Dichtigkeit beim Verschließen des Kapselrohrs durch den Verschlußstopfen zu gewährleisten, ist der in das Kapselrohr einbringbare Teilbereich des Verschlußstopfens vorteilhafterweise in seinem Außenquerschnitt an den Innenquerschnitt des Kapselrohrs angepasst.

Das Einsetzen eines Brennstabs mit einem schadhaften Hüllrohr in ein derartiges Kapselrohr erfolgt üblicherweise unter Wasser, beispielsweise im Brennelementlagerbecken eines Kernkraftwerkes. Somit gelangt ein im wesentlichen inkompressibles Medium, nämlich das Wasser, gemeinsam mit einer Wärmequelle, nämlich dem auch noch nach seiner Aussonderung aus dem Brennelement noch Zerfallswärme generierenden Brennstab, in das Kapselrohr. Andererseits ist ein gas- und partikeldichtes Verschließen des Kapselrohrs vorgesehen. Um einem dadurch bedingten unerwünschten und möglicherweise sicherheitsrelevanten Druckaufbau in der verschlossenen Kapsel geeignet begegnen zu können, ist der Verschlußstopfen zweckmäßigerweise für eine bedarfsweise Druckentlastung und/ oder für eine bedarfsweise Beaufschlagung mit einem Hilfsmedium, beispielsweise einem Spülmedium, ausgestaltet. Somit ist auch bei verschlossener Kapsel bedarfsweise eine Medienzufuhr, beispielsweise die Zufuhr eines Inertisierungsmittels, in die Kapsel und/oder eine Medienabfuhr, beispielsweise von in der verschlossenen Kapsel enthaltenem Restwasser oder von Restgasen, aus der Kapsel ermöglicht. Dazu ist der Verschlußstopfen vorteilhafterweise von einem absperrbaren Medienkanal durchdrungen, über den bedarfsweise auch bei verschlossener Kapsel eine Verbindung ihres Innenraums mit ihrem Außenraum herstellbar ist.

Um dabei ein selbsttätiges und somit möglicherweise unkontrolliertes Öffnen des Medienkanals auszuschließen, ist dieser in weiterer vorteilhafter Ausgestaltung über ein mit einer Rückstellfeder beaufschlagtes Verschlußelement absperrbar. Diese spannt das Verschlußelement in seinem Sitz zweckmäßigerweise derart vor, daß das Verschlußelement den Medienkanal lediglich bei einem gezielten Zugriff von außen, nicht aber infolge eines Druckaufbaus im Inneren der verschlossenen Kapsel freigibt. Das Verschlußelement kann dabei insbesondere als Kegelventil oder auch als Kugelventil ausgebildet sein.

Um mit einfachen Mitteln eine besonders hohe Gas- und Partikeldichtigkeit beim Verschließen des Kapselrohres zu gewährleisten, ist in weiterer vorteilhafter Ausgestaltung in der oder jeder umlaufenden Nut des Verschlußstopfens jeweils ein umlaufender Dichtring angeordnet. Dieser besteht in weiterer vorteilhafter Ausgestaltung aus im Vergleich zum Material des in das Kapselrohr einbringbaren Teilbereichs des Verschlußstopfens weicheren Material. Dabei kann insbesondere ein vergleichsweise weiches Metall vorgesehen sein, das insbesondere in Kontakt mit dem Kapselrohr eine durchgehende formschlüssige Verbindung zwischen der Innenseite des Kapselrohres und der Außenseite des Verschlußstopfens herstellt.

Bezüglich der Kapsel für einen Kernbrennstab wird die genannte Aufgabe gelöst mit einem in einer Längsrichtung ausgedehnten Kapselrohr, das an zumindest einem freien Ende mit einem Verschlußstopfen der genannten Art verschlossen ist.

Um beim Verschließen des Kapselrohrs mit einem derartigen Verschlußstopfen eine besonders hohe Gas- und Partikeldichtigkeit mit einfachen Mitteln zu gewährleisten, ist das Kapselrohr vorteilhafterweise jeweils im Bereich einer der umlaufenden Nuten des Verschlußstopfens zu einem mit der jeweiligen Nut in Eingriff stehenden umlaufenden Sicke verformt. In weiterer zweckmäßiger Ausgestaltung bildet das Kapselrohr dabei im Bereich der jeweiligen Sicke eine formschlüssige und gasdichte Verbindung mit dem jeweiligen Verschlußstopfen. Bei der Montage kann der Verschlußstopfen dabei in das Kapselrohr eingeschoben werden, wobei anschließend an der Stelle der jeweiligen Nuten von außen die jeweilige Sicke angebracht wird. Diese legt sich sodann unter Bildung einer dichten Verbindung in die jeweilige Nut. Gerade in Verbindung mit dem in der Nut angeordneten umlaufenden Dichtring ist somit eine besonders hohe Dichtigkeit erreichbar, zumal der vergleichsweise weiche Dichtring zur Herstellung einer formschlüssigen und gasdichten Verbindung zwischen der Sicke des Kapselrohrs und der Nut des Verschlußstopfens geeignet eingeformt oder eingequetscht wird.

Einem Verschlußstopfen mit Medienkanal ist vorteilhafterweise ein innerhalb der Kapsel im Mündungsbereich des Medienkanals angeordneter Sintermetallfilter zugeordnet, der eine zuverlässige Partikelrückhaltung auch bei geöffnetem Verschlußelement gewährleistet. Die mit der Erfindung erzielten Vorteile bestehen insbesondere darin, daß durch die vergleichsweise glatte Außenkontur des Verschlußstopfens in seinem in das Kapselrohr einbringbaren Teilbereich der Verschlußstopfen einerseits besonders einfach herstellbar und andererseits besonders einfach am Kapselrohr montierbar ist. Gerade durch die Abkehr von einer Schraubverbindung zwischen Verschlußstopfen und Kapselrohr ist dabei bei einfacher Positionierung und Montage eine besonders raumsparende Bauweise ermöglicht, die zudem auch die Verwendung eines in seiner Rohrendkontur besonders einfach gehaltenen Kapselrohrs zulässt. Die im Teilbereich des Verschlußstopfens angeordneten umlaufenden Nuten ermöglichen dabei trotz der vergleichsweise einfachen Bauweise des Verschlußstopfens die Herstellung einer hohen Dichtigkeitsanforderungen genügenden Verbindung zwischen dem Endbereich des Kapselrohrs und dem Verschlußstopfen an sich. Durch die raumsparende Bauweise können die Brennstabkapseln im Querschnitt vergleichsweise kompakt ausgeführt sein, so daß sich zusätzlich auch Vorteile bei der Raumbelegung in Verbindung mit der Nutzung eines Kapselköchers ergeben.

Ein Ausführungsbeispiel der Erfindung wird anhand einer Zeichnung näher erläutert. Darin zeigen:
- Fig. 1: in Seitenansicht schematisch ein Kernreaktorbrennelement für einen Druckwasserreaktor,
- Fig. 2: im Längsschnitt eine Kapsel für einen Brennstab,
- Fig. 3: im Längsschnitt das Endstück einer alternativen Ausführungsform einer Kapsel für einen Brennstab, und
- Fig. 4: schematisch einen in ein Kapselrohr eingesetzten Verschlußstopfen vor (Figur 4a) und nach (Figur 4b) dem Anbringen von umlaufenden Sicken im Kapselrohr.

Gleiche Teile sind in allen Figuren mit denselben Bezugszeichen versehen.

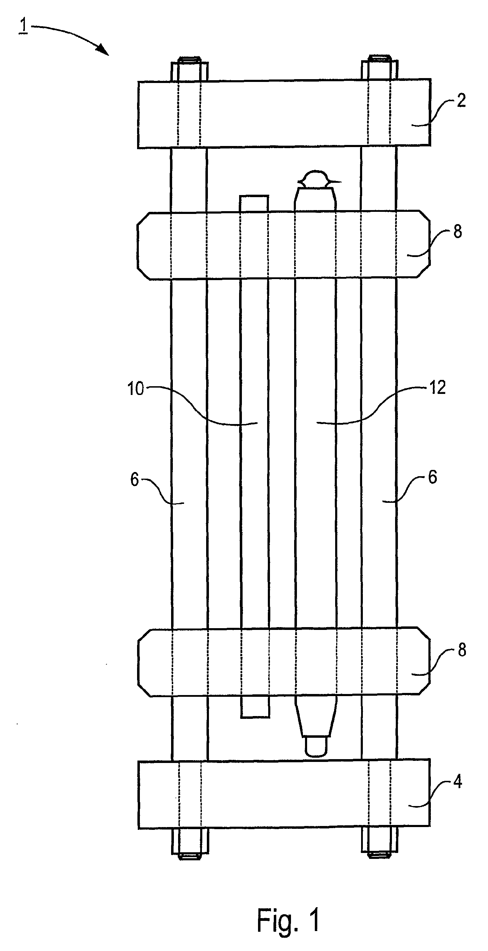

Das Reaktorbrennelement 1 gemäß Fig. 1 ist zum Einsatz in einen Druckwasserreaktor vorgesehen. Es weist an seinem oberen Ende einen Brennelementkopf 2 und an seinem unteren Ende einen Brennelementfuß 4 auf. Der Brennelementkopf 2 und der Brennelementfuß 4 weisen dabei den gleichen quadratischen Querschnitt auf. Der Brennelementkopf 2 und der Brennelementfuß 4 sind über eine Anzahl von Verbindungsstäben 6 mechanisch verbunden. Die Verbindungsstäbe 6, von denen jeder mit einem Ende am Brennelementkopf 2 und mit seinem anderen Ende am Brennelementfuß 4 festgeschraubt ist, sind dabei jeweils als Steuerstabführungsrohr ausgebildet und enthalten keinen Kernbrennstoff. Die Verbindungsstäbe 6 sind jeweils durch eine Gittermasche von gitterförmigen Abstandshaltern 8 geführt, die beabstandet voneinander zwischen dem Brennelementkopf 2 und dem Brennelementfuß 4 angeordnet sind. Jeder Verbindungsstab 6 ist zumindest an seinem oberen Ende offen, so daß ein Neutronen absorbierender Steuerstab in den somit als Steuerstabführungsrohr dienende Verbindungsstab 6 einschiebbar ist.

Das Reaktorbrennelement 1 umfasst weiterhin eine Anzahl von Brennstäben 10, von denen in Fig. 1 lediglich einer gezeigt ist. Jeder Brennstab 10 umfasst dabei ein nicht näher dargestelltes Hüllrohr, das mit einer gewissen Menge an Kernbrennstoff gefüllt ist. Die Brennstäbe 10 sind parallel zueinander und parallel zu den Verbindungsstäben 6 zwischen dem Brennelementkopf 2 und dem Brennelementfuß 4 angeordnet. Dabei ist jeder Brennstab 10 ebenfalls durch eine Gittermasche jedes der gitterförmigen Abstandshalter 8 geführt und in dieser Gittermasche unter Einwirkung von Blattfedern des Abstandhalters 8 kraftschlüssig gehaltert.

Die gitterförmigen Abstandshalter 8 sind formschlüssig außen an den Verbindungsstäben 6 gehaltert. Dies kann außen an einem Verbindungsstab 6 durch zwei nicht näher dargestellte Halterhülsen bewirkt sein, zwischen denen sich der gitterförmige Abstandhalter 8 befindet, und die außen an dem jeweiligen Verbindungsstab 6 angeschweißt sind.

Im Reaktorbrennelement 1 nach Fig. 1 ist zudem eine Kapsel 12 gezeigt, die einen der Brennstäbe 10 mit schadhaft gewordenem Hüllrohr umgibt. Die Kapsel 12 ist dabei dazu vorgesehen, den defekt gewordenen und somit austauschbedürftigen Brennstab 10 sicher und dicht zu verschließen und somit auch bei defektem oder insbesondere undichtem Hüllrohr einen Transport und/oder eine Zwischenoder Endlagerung des jeweiligen Brennstabs 10 ohne Belastung der Umwelt zu ermöglichen.

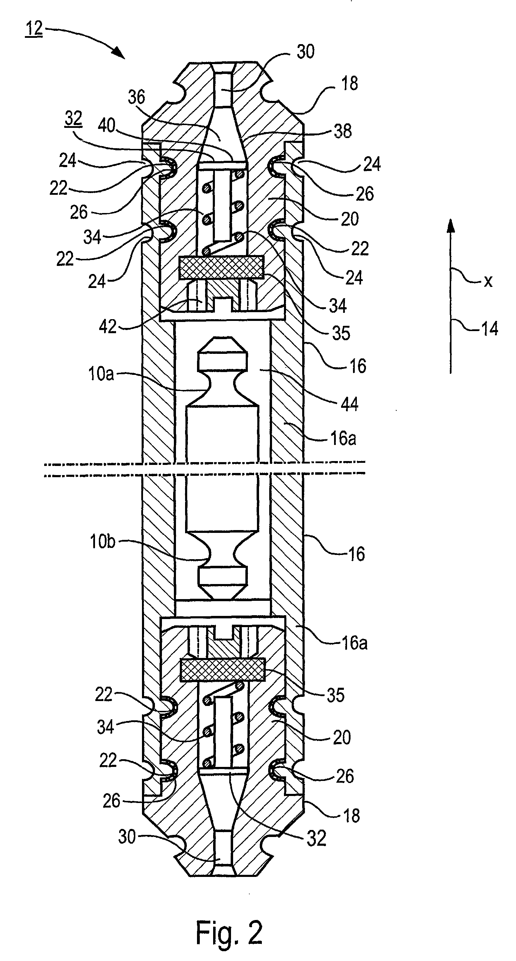

Die Kapsel 12 ist in Fig. 2 im Längsschnitt gezeigt. Sie umfasst ein entlang einer durch den Pfeil 14 angedeuteten Längsrichtung x ausgedehntes Kapselrohr 16, von dem in Fig. 2 lediglich seine Endbereiche 16a und 16b gezeigt sind. Innerhalb des aus nicht rostendem Stahl hergestellten Kapselrohrs 16 ist der Brennstab 10 mit schadhaft gewordener Hülle angeordnet. In Fig. 2 sind dabei ebenfalls lediglich die Endstücke 10a und 10b des Brennstabs 10 gezeigt. Der Brennstab 10 weist dabei ein langgestrecktes Hüllrohr aus einer Zirkoniumlegierung auf, das endseitig jeweils mit einem Endstopfen verschlossen ist. Beide Endstopfen bestehen dabei ebenfalls aus einer Zirkoniumlegierung und sind mit dem Hüllrohr verschweißt. Innerhalb des Hüllrohrs befindet sich Kernbrennstoff wie beispielsweise UO₂. Da der Brennstab 10 aus dem Brennelement 1 entnommen ist, das sich bereits in Betrieb befand, ist sein Kernbrennstoff ein radioaktiver Körper. Aufgrund der Beschädigung des Hüllrohrs des Brennstabs 10 können radioaktive Brennstoffpartikel und auch gasförmige radioaktive Kernspaltprodukte durch sein Hüllrohr hindurch in seinen Außenbereich gelangen.

Um eine Freisetzung dieser Produkte beim Transport und/oder bei der Lagerung des Brennstabs 10 sicher auszuschließen, ist das den Brennstab 10 umgebende Kapselrohr 16 an seinen Enden jeweils durch einen Verschlußstopfen 18 gas- und partikeldicht verschlossen. Jeder Verschlußstopfen 18 weist dazu jeweils einen Teilbereich 20 mit im wesentlichen zylindrischer Außenkontur auf. Der Teilbereich 20 ist dabei in seinem Außenquerschnitt an den Innenquerschnitt des Kapselrohrs 16 angepasst. Aufgrund der vergleichsweise einfachen Gestaltung der Außenkontur des Teilbereichs 20 ist der Verschlußstopfen 18 mit seinem Teilbereich 20 auf besonders einfache Weise herstellbar und zudem auch mit besonders geringem Aufwand in den jeweiligen Endbereich des Kapselrohrs 16 einbringbar.

Zur zuverlässigen Herstellung einer gasdichten Verbindung zwischen dem jeweiligen Verschlußstopfen 18 und dem Kapselrohr 16 sind in seinem Teilbereich 20 an seiner Oberfläche eine Anzahl von umlaufenden Nuten 22 oder Dichtnuten angebracht. Die Nuten 22 sind dabei jeweils in der Art von Eindrehungen in den den Verschlußstopfen 18 bildenden Grundkörper eingeformt. Zur Herstellung einer dichten Verbindung mit dem Verschlußstopfen 18 ist das Kapselrohr 16 im Bereich der jeweiligen Nut 22 zu einer mit der Nut 22 in Eingriff stehenden umlaufenden Sicke 24 verformt. Für eine besonders hohe Dichtigkeit ist dabei zusätzlich in der umlaufenden Nut 22 jeweils ein umlaufender Dichtring 26 aus einem im Vergleich zum Material des Verschlußstopfens 18 weichen Metall angeordnet.

Beim Einbringen der jeweiligen Sicke 24 in das Kapselrohr 16, das nach dem Einschieben des Verschlußstopfens 18 erfolgt, wird das Material des Kapselrohrs 16 in Richtung auf die jeweils darunterliegende Nut 22 hin verformt. Dabei erfolgt eine Quetschung des jeweiligen Dichtrings 26, so daß sich im Bereich der jeweiligen Sicke 24 eine formschlüssige und gasdichte Verbindung des Kapselrohrs 16 mit dem jeweiligen Verschlußstopfen 18 ergibt. Gerade bei einer geeigneten Materialwahl für den Verschlußstopfen 18 und für den Dichtring 26 ist dabei eine besonders hohe Dichtigkeit der Verbindung von Verschlußstopfen 18 und Kapselrohr 16 erreichbar.

Um auch nach dem Verschließen des Kapselrohrs 16 bedarfsweise einen Zugang zum Innenraum der Kapsel 12 herzustellen, ist jeder Verschlußstopfen 18 jeweils mit einem Medienkanal 30 versehen. Der Medienkanal 30, der im Bedarfsfall beispielsweise zur Zufuhr von Inertisierungsmitteln in den Innenraum der Kapsel 12 oder auch zum Abführen von bei der Beschickung der Kapsel 12 in deren Innenraum verbliebenem Restwasser oder zum kontrollierten Abführen von in im Innenraum der Kapsel 12 befindlichen gasförmigen Spaltprodukten einsetzbar ist, durchdringt dabei das jeweilige Verschlußelement 18 im Ausführungsbeispiel im wesentlichen zentral entlang seiner Mittelachse. Der Medienkanal 30 führt somit von außen durch den Verschlußstopfen 18 in den Innenraum der Kapsel 12. Der Medienkanal 30 ist jeweils über ein Verschlußelement 32 absperrbar. Das Verschlußelement 32 ist dabei mit einer Rückstellfeder 34 beaufschlagt. Zur Partikelrückhaltung in der Kapsel 12 ist zudem ein Sintermetallfilter 35 innerhalb der Kapsel 12 im Mündungsbereich des Medienkanals 30 angeordnet.

Im Ausführungsbeispiel gemäß Fig. 2 ist als Verschlußelement 32 ein Kegelventil 36 vorgesehen. Das Kegelventil 36 umfasst dabei einen sich kegelförmig verengenden Abschnitt 38 im Medienkanal 30, der über einen Ventilteller 40 verschließbar ist. Der Ventilteller 40 wird dabei durch die Rückstellfeder 34 in seinem Ventilsitz gehalten. Die Rückstellfeder 34 ist dazu mit ihrem Federende an einer Mutter 42 abgestützt. Ein Zugang vom Außenbereich der Kapsel 12 in ihren Innenraum 44, beispielsweise zum Zuführen eines Inertisierungsmittels oder zum Abführen von Gasen oder Partikeln aus dem Innenraum 44, kann beispielsweise über ein in seiner Dimensionierung an den Innenquerschnitt des Medienkanals 30 angepasstes Formstück bewirkt werden. Dieses kann bedarfsweise durch den Medienkanal 30 geschoben und zum Öffnen des Kegelventils 36 verwendet werden. Dabei kann insbesondere der Ventilteller 40 in Richtung auf den Innenraum 44 der Kapsel 12 hin aus seinem Ventilsitz gedrückt werden, wobei sich das Kegelventil 36 öffnet.

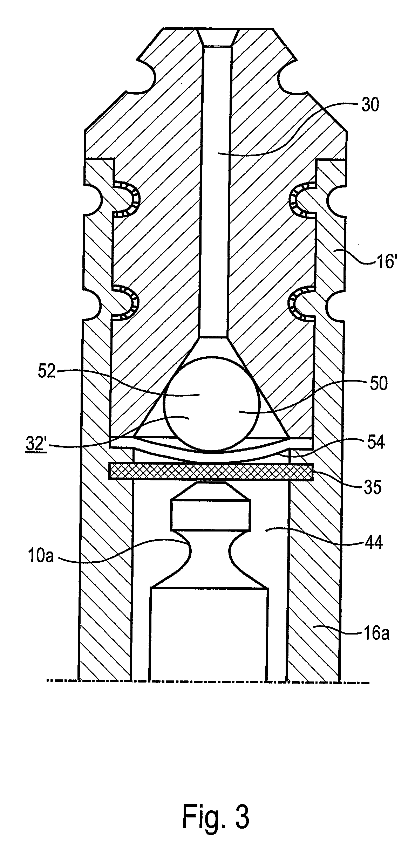

Im alternativen Ausführungsbeispiel gemäß Fig. 3, in der lediglich ein Endbereich 16a des Kapselrohrs 16' gezeigt ist, ist das Verschlußelement 32'als Kugelventil 50 ausgebildet. Dies umfasst eine Kugel 52, die in einer Verschlußposition an einem sich zur Außenöffnung des Medienkanals 30 hin konisch verjüngenden Teil der Wand des Medienkanals 30 anliegt. Der Kugel 52 ist eine Blattfeder 54 zugeordnet, die als Rückstellfeder dient. Die Blattfeder 54 liegt flach an der Kugel 52 an und greift lose in eine Hinterdrehung im Endbereich 16a des Kapselrohrs 16'.

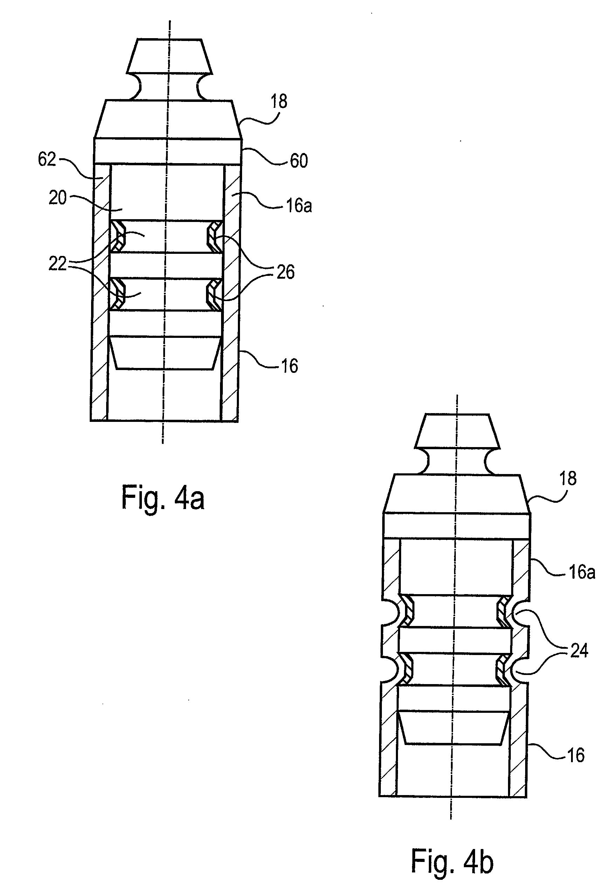

Zur weiteren Verdeutlichung des Verschlußkonzepts ist in Fig. 4 schematisch erneut der in das Kapselrohr 16 eingesetzte Verschlußstopfen 18 gezeigt, wobei in Fig. 4b die Situation vor und in Fig. 4b die Situation nach dem Einbringen der umlaufenden Sicken 24 im Kapselrohr 16 dargestellt ist. Aus Gründen der Darstellbarkeit ist der Medienkanal und der ihm zugeordnete Verschlußmechanismus in Fig. 4 nicht gezeigt.

Wie aus Fig. 4a deutlich wird, weist das Kapselrohr 16 in seinem Endbereich 16a zunächst eine glatte, durchgehende Rohrwand auf. Der Verschlußstopfen 18 ist in seinem Teilbereich 20 im wesentlichen zylindrisch ausgebildet und in seinem Außenquerschnitt an den Innenquerschnitt des Kapselrohrs 16 angepasst. Abweichungen vom zylindrischen Außenquerschnitt ergeben sich dabei im wesentlichen durch die umlaufenden Nuten 22, denen jeweils der Dichtring 26 zugeordnet ist. Wie aus Fig. 4a erkennbar ist, ist der Verschlußstopfen 18 in diesem Zustand auf einfache Weise in axialer Richtung des Kapselrohrs 16 frei verschiebbar, bis er mit seinem Kopf 60 bündig auf der umlaufenden Mündung 62 des Kapselrohrs 16 aufliegt. Gerade infolge der freien Verschiebbarkeit ist der Verschlußstopfen 18 somit auf besonders einfache Weise in das Kapselrohr 16 einbringbar oder montierbar.

Wie Fig. 4b verdeutlicht, erfolgt nach dem Einschieben des Verschlußstopfens 18 in das Kapselrohr 16 das Anbringen der umlaufenden Sicken 24. Die axiale Positionierung ist dabei derart gewählt, daß jede Sicke 24 in eine darunterliegende Nut 22 des Verschlußstopfens 18 eingreift. Somit ergibt sich eine formschlüssige und gas- und partikeldichte Verbindung zwischen dem Kapselrohr 16 und dem Verschlußstopfen 18. Nach dem Anbringen der jeweiligen Sicke 24 ist der Verschlußstopfen 18 auch nicht mehr in axialer Richtung des Kapselrohrs 16 bewegbar. Somit ist ein dauerhafter und mechanisch belastbarer Verschluß für das Kapselrohr 16 gegeben.

Bezugszeichenliste
- 1: Reaktorbrennelement
- 2: Brennelementkopf
- 4: Brennelementfuß
- 6: Verbindungsstäbe
- 8: Abstandshalter
- 10: Brennstäbe
- 10a, 10b: Endbereiche
- 12: Kapsel
- 14: Pfeil
- 16, 16': Kapselrohr
- 16a, 16b: Endbereiche
- 18: Verschlußstopfen
- 20: Teilbereich
- 22: Nuten
- 24: Sicke
- 26: Dichtring
- 30: Medienkanal
- 32, 32': Verschlußelement
- 34: Rückstellfeder
- 35: Sintermetallfilter
- 36: Kegelventil
- 38: Abschnitt
- 40: Ventilteller
- 42: Mutter
- 44: Innenraum
- 50: Kugelventil
- 52: Kugel
- 54: Blattfeder
- 60: Kopf
- 62: umlaufende Mündung
- x: Längsrichtung

## Patentansprüche

1. Verschlußstopfen (18) für ein zur Aufnahme eines Brennstabes (10) bestimmtes Kapselrohr (16), der in einem in das Kapselrohr (16) einbringbaren Teilbereich an seiner Oberfläche eine Anzahl von umlaufenden Nuten (22) aufweist.

2. Verschlußstopfen (18) nach Anspruch 1, dessen in das Kapselrohr (16) einbringbarer Teilbereich in seinem Außenquerschnitt an den Innenquerschnitt des Kapselrohrs (16) angepasst ist.

3. Verschlußstopfen (18) nach Anspruch 1 oder 2, der von einem absperrbaren Medienkanal (30) durchdrungen ist.

4. Verschlußstopfen (18) nach Anspruch 3, dessen Medienkanal (30) über ein mit einer Rückstellfeder (34) beaufschlagtes Verschlußelement (32) absperrbar ist.

5. Verschlußstopfen (18) nach einem der Ansprüche 1 bis 4, bei dem in der oder jeder umlaufenden Nut (22) jeweils ein umlaufender Dichtring (26) angeordnet ist.

6. Verschlußstopfen (18) nach Anspruch 5, bei dem der oder jeder Dichtring (26) aus im Vergleich zum Material des in das Kapselrohr (16) einbringbaren Teilbereichs weicheren Material besteht.

7. Kapsel (12) für einen Kernbrennstab (10) mit einem in einer Längsrichtung ausgedehnten Kapselrohr(16), das an zumindest einem freien Ende (16a, 16b) mit einem Verschlußstopfen (18) nach einem der Ansprüche 1 bis 6 verschlossen ist.

8. Kapsel (12) nach Anspruch 7, deren Kapselrohr (16) jeweils im Bereich einer der umlaufenden Nuten (22) des Verschlußstopfens (18) zu einer mit der jeweiligen Nut (22) in Eingriff stehenden umlaufenden Sicke (24) verformt ist.

9. Kapsel (12) nach Anspruch 8, deren Kapselrohr (16) im Bereich der jeweiligen Sicke (24) eine formschlüssige und gasdichte Verbindung mit dem jeweiligen Verschlußstopfen (18) bildet.
